# NEUE EUROPÄISCHE PATENTSCHRIFT

(11) **EP 2 500 575 B2**
(45) Veröffentlichungstag und Bekanntmachung des Hinweises auf die Entscheidung über den Einspruch: **25.05.2022**
(45) Hinweis auf die Patenterteilung: 13.07.2016
(21) Anmeldenummer: 11002071.6
(22) Anmeldetag: 12.03.2011
(51) Int. Cl.: F04D 13/06, F04D 29/02, F04D 29/42, H02K 5/128, H02K 5/22

(54) **Heizungsumwälzpumpe**
Heat circulation pump
Pompe de recirculation de chauffage

(43) Veröffentlichungstag der Anmeldung: 19.09.2012
(73) Patentinhaber: Grundfos Management a/s, 8850 Bjerringbro (DK)
(72) Erfinder: Høj, Finn Mathiesen, 8200 Aarhuis N (DK); Blad, Thomas, 8850 Bjerringbro (DK)
(74) Vertreter: Patentanwälte Vollmann Hemmer Lindfeld Partnerschaft mbB

(56) Entgegenhaltungen:
- EP-A1- 1 437 819
- EP-A1- 2 151 897
- EP-A2- 1 239 152
- DE-A1-102007 022 070
- US-A1- 2008 118 380

## Beschreibung

Die Erfindung betrifft eine Heizungsumwälzpumpe mit den im Oberbegriff des Anspruchs 1 angegebenen Merkmalen.

Derartige Heizungsumwälzpumpen zählen zum Stand der Technik. Sie weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motorgehäuse, insbesondere das Statorgehäuse mit dem Pumpengehäuse verbunden ist. Zum elektrischen Anschluss des Motors ist ein Klemmenkasten vorgesehen, welcher an der vom Pumpengehäuse abgewandten Axialseite des Statorgehäuses angeordnet ist. Der Klemmenkasten umfasst typischerweise auch die Motorelektronik, also beispielsweise einen Frequenzumrichter. Eine Heizungspumpe der vorgenannten Art ist beispielsweise aus DE 10 2004 030 721 B3 bekannt.

Eine Heizungsumwälzpumpe dieser Art ist aus EP 1 437 819 A1 bekannt. Dort ist der Klemmenkasten in axialer Verlängerung des Motors angeordnet und überragt diesen an einer Seite radial. Dort ist ein Stecker vorgesehen, der durch einen quasi von hinten, also vom Pumpengehäuse aus aufsteckbaren Gegenstecker kontaktierbar ist.

Aus US 2008/0118380 A1 zählt eine Pumpe zum Stand der Technik, die zum Umwälzen eines Kühlkreislaufes einer Maschine oder eines Umrichters vorgesehen ist. Bei dieser Pumpe ist der Antriebsmotor innerhalb der Pumpe angeordnet, wobei innerhalb des Pumpen- und Motorgehäuses rückseitig ein Anschluss- und Elektronikkasten eingegliedert ist, welcher zu einem Stecker geformt ist, der neben Pumpe und Motor angeordnet ist und der Teil des gemeinsamen Motor-, Pumpen- und Klemmenkastengehäuses bildet.

Derartige Heizungsumwälzpumpen kleiner und mittlerer Bauart werden in Großserien hergestellt, weshalb auch kleinste Verbesserungen schon große Einsparungen bei Fertigung und/oder Montage bedeuten können. Es ist ein stetes Bestreben diese Pumpen einerseits technisch weiter zu verbessern und noch zuverlässiger zu gestalten andererseits die Herstellungs- und Montagekosten zu senken.

Diese Aufgabe wird gemäß der Erfindung durch eine Heizungsumwälzpumpe mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Die erfindungsgemäße Heizungsumwälzpumpe weist ein Pumpengehäuse mit darin angeordnetem Pumpenlaufrad auf, das von einem Elektromotor angetrieben ist, der in einem axial an das Pumpengehäuse anschließenden Motorgehäuse angeordnet ist. Axial an das Motorgehäuse schließt ein Klemmenkasten zur Aufnahme von elektrischen und/oder elektronischen Bauteilen der Motorsteuerung an, der außenseitig mit einem Stecker oder einer Muffe einer elektrischen Steckverbindung versehen ist, die zum elektrischen Anschluss dient. Erfindungsgemäß ist der Stecker oder die Muffe axial versetzt zum Klemmenkasten und benachbart zum Motorgehäuse angeordnet.

Grundgedanke der erfindungsgemäßen Lösung ist es, den Stecker oder die Muffe zum elektrischen Anschluss des Motors nicht im Bereich des Klemmenkastens, sondern axial versetzt dazu und benachbart zum Motorgehäuse anzuordnen. Diese Anordnung hat den Vorteil, dass die elektrische Steckverbindung in einem typischerweise ungenutzten Bereich neben dem Motor angeordnet ist und somit den Klemmenkasten axial nicht überragt. Dieser Bereich seitlich des Motors ist typischerweise ohnehin nicht nutzbar, da in diesem Bereich bei modernen langbauenden Permanentmagnetmotoren das Pumpengehäuse das Motorgehäuse radial überragt und somit einen Freiraum schafft, der ungenutzt ist und somit zur Verfügung steht.

Gemäß der Erfindung ist der Stecker oder die Muffe so angeordnet, dass das Gegenstück der Steckverbindung in axialer Richtung zum Pumpengehäuse hin aufsteckbar ist. Die Aufsteckbarkeit in axialer Richtung benötigt zum einen keinen zusätzlichen Freiraum, da dieser Bereich ohnehin zugänglich bleiben muss, um im Falle eines Defektes den Motorkopf vom Pumpengehäuse trennen zu können. Die axiale Aufsteckrichtung hat darüber hinaus den Vorteil, dass die Steckverbindung flachbauend an der radialen Außenseite der Heizungsumwälzpumpe anliegt und nicht wie sonst üblich bei radialen Steckverbindungen seitlich, also quer zur Laufradachse angeordnet ist und radial vorsteht. Die Steckverbindung kann bei dieser Anordnung praktisch vollständig innerhalb der Außenkontur des Pumpengehäuses (in axialer Richtung gesehen) liegen, neben dem insoweit schlankeren Motorgehäuse.

Das Motorgehäuse weist zumindest im Bereich des Stators einen im Wesentlichen kreisrunden Querschnitt auf und ist zum Pumpengehäuse hin mit einem im Wesentlichen rechteckigen, jedoch abgerundeten Flansch versehen. Mit diesem Flansch schließt das Motorgehäuse an das Pumpengehäuse an, wobei in den Eckbereichen des Flansches Schrauben durchgeführt sind, welche Motorgehäuse und Pumpengehäuse verbinden. Gemäß einer vorteilhaften Weiterbildung der Erfindung ist der Stecker oder die Muffe in einem radialen Bereich angeordnet, der zwischen einer gedachten axialen Verlängerung benachbarter Schrauben oder radial versetzt dazu liegt.

Dabei ist es vorteilhaft, den Stecker oder die Muffe in einen Bereich anzuordnen, der im Wesentlichen parallel zur Durchströmungsrichtung der Pumpe zwischen Saugstutzen und Druckschutz liegt und nicht quer dazu. Dies ist insbesondere von Vorteil, wenn der Klemmenkasten in Teilbereichen zwischen gedachten axialen Verlängerungen benachbarter Schrauben radial auskragend, ggf. sogar die Außenkontur des Pumpengehäuses überragend ausgebildet ist. Dann liegen nämlich diese überragenden Bereiche des Klemmenkastens in Achsrichtung des Laufrades gesehen im Bereich von Saugstutzen bzw. Druckstutzen, also sonst ohnehin nicht oder nur schwer nutzbaren Freiräumen.

Vorteilhaft ist neben dem Stecker oder der Muffe, welche für den elektrischen Anschluss vorgesehen ist, ein weiterer Stecker oder eine weitere Muffe angeordnet, über die ein Sensor oder eine externe Drehzahlsteuerung anschließbar ist. Dieser weitere Stecker oder diese weitere Muffe sind dann vorteilhaft ebenfalls so angeordnet, dass ihre Steckverbindung in axialer Richtung verläuft, d.h. das Gegenstück aus einem Bereich neben dem Klemmenkasten in Richtung zum Pumpengehäuse aufgesteckt werden kann. Als Sensor kann beispielsweise ein externer Drucksensor, ein externer Temperatursensor oder ein Durchflussmesser angeschlossen sein. Eine externe Steuerung kann beispielsweise die Kesselsteuerung der Heizungsanlage sein, die beispielsweise die Pulsweite für die Motorsteuerung im Falle einer Pulsweitensteuerung vorgibt.

Besonders vorteilhaft ist es, wenn der oder die Stecker bzw. der oder die Muffen einstückig mit zumindest einem Teil des Klemmenkastens als Kunststoffspritzgussteil ausgebildet sind und eingegossene Kontakte aufweisen, die innerhalb des Klemmenkastens vorzugsweise in oder an einer Platine im Klemmenkasten enden. Dabei sind Stecker oder Muffen vorteilhaft an den Grundkörper des Klemmenkastens angeformt, welcher den zum Motor benachbarten Boden und zumindest einen Teil der Seitenwände umfasst. Das Eingießen der Kontakte gewährleistet eine dichte Kontaktdurchführung vom Inneren des Klemmenkastens nach außen, bewirkt zu dem einen stabilen Stecker bzw. eine stabile Muffe und fixiert zugleich die innerhalb des Klemmenkastens angeordnete Platine, in der die Kontakte enden.

Wenn neben dem Stecker oder der Muffe für den elektrischen Anschluss ein weiterer Stecker oder eine weitere Muffe für einen Sensor oder eine externe Steuerung vorgesehen sind, ist es von Vorteil, diese Bauteile nicht unmittelbar nebeneinander, sondern in axialer Richtung versetzt zueinander angeordnet, was die Zugänglichkeit der jeweiligen Steckverbindung verbessert.

Da der Stecker oder die Muffe für den elektrischen Anschluss typischerweise größer und ausladender ist als der für den Sensor oder den Steuerungsanschluss ist es zweckmäßig, den Stecker oder die Muffe für den elektrischen Anschluss weiter zur Pumpe hin, also im Bereich des Motorgehäuses anzuordnen und den weiteren Stecker oder die weitere Muffe im Bereich des Klemmenkastens anzuordnen. Diese Anordnung hat darüber hinaus den Vorteil, dass die Steckverbindungen sich bei der Handhabung gegenseitig nicht behindern.

Besonders vorteilhaft ist, wenn die Steckverbindungen mittels einer Schnappverbindung verbunden sind, d.h. das mindestens eine Schnappverbindung zwischen Stecker und Muffe bzw. zwischen Muffe und Stecker vorgesehen sind, sodass nach dem Aufstecken die beiden Bauteile elektrisch und mechanisch miteinander verbunden sind. Die Schnappverbindung ist dabei so ausgelegt, dass sie in Aufsteckrichtung selbsttätig verrastet.

Dabei ist vorteilhaft nicht nur die Verbindung zwischen Stecker und Muffe, also die elektrische Steckverbindung, sondern auch die Verbindung zwischen Klemmenkasten und Motorgehäuse und/oder Pumpengehäuse als Schnappverbindung ausgestaltet, dann können Klemmenkasten und Motorgehäuse bzw. Klemmenkasten und Pumpengehäuse in gleicher Weise durch Aufstecken werkzeuglos miteinander verbunden werden, wie dies bei der elektrischen Steckverbindung der Fall ist. Vorteilhaft erfolgt die Schnappverbindung in gleiche Richtung, also beim Aufsetzen des Klemmenkastens in axialer Richtung auf den Motor.

Vorteilhaft sind der Stecker oder die Muffe zur elektrischen Verbindung als Flachstecker oder Flachmuffe ausgebildet, also derart, dass die Kontakte im Wesentlichen in einer Ebene nebeneinander liegen und zwar vorzugsweise in einer Ebene im Wesentlichen parallel zum Motorgehäuse. Durch diese Anordnung wird eine sehr kompakte Bauweise erzielt, insbesondere trägt die Steckverbindung an der Seite des Motorgehäuses dadurch in radialer Richtung wenig auf.

Zweckmäßigerweise ist nicht nur der Stecker oder die Muffe, welche zum elektrischen Anschluss der Heizungsumwälzpumpe dient, als Flachstecker oder Flachmuffe ausgebildet sondern darüber hinaus etwaige weitere Stecker oder Muffen, insbesondere ein solcher weiterer Stecker oder eine solche weitere Muffe für einen Sensor oder eine externe Motorsteuerung. Diese weisen dann zweckmäßigerweise ebenfalls Kontakte auf, die in einer Ebene nebeneinander liegen, die parallel zum Motorgehäuse oder im Wesentlichen parallel dazu angeordnet ist, also in radialer Richtung wenig aufträgt.

Die Erfindung ist nachfolgend anhand von in der Zeichnung dargestellten Ausführungsbeispielen näher erläutert. Es zeigen:
- Fig. 1: in vereinfachter perspektivischer Darstellung eine Heizungsumwälzpumpe gemäß der Erfindung,
- Fig. 2: einen Klemmenkasten mit radialen Erweiterungen in Darstellung entsprechend Fig. 1,
- Fig. 3: in perspektivischer Explosionsdarstellung Pumpe, Motor und Klemmenkasten,
- Fig. 4: in perspektivischer Explosionsdarstellung den Klemmenkasten gemäß Fig. 3 in seinem Aufbau,
- Fig. 5: eine perspektivische Ansicht des Klemmenkastens von unten,
- Fig. 6: eine perspektivische Längsschnittdarstellung von Klemmenkasten und Motor mit angesetztem Pumpenlaufrad,
- Fig. 7: in vergrößerter Darstellung einen Längsschnitt im Bereich des Erdungskontaktes zwischen Klemmenkasten und Motor und
- Fig. 8: in vergrößerter Darstellung eine Ansicht auf den Eckbereich des Motorgehäuseflansches von der Pumpenseite.

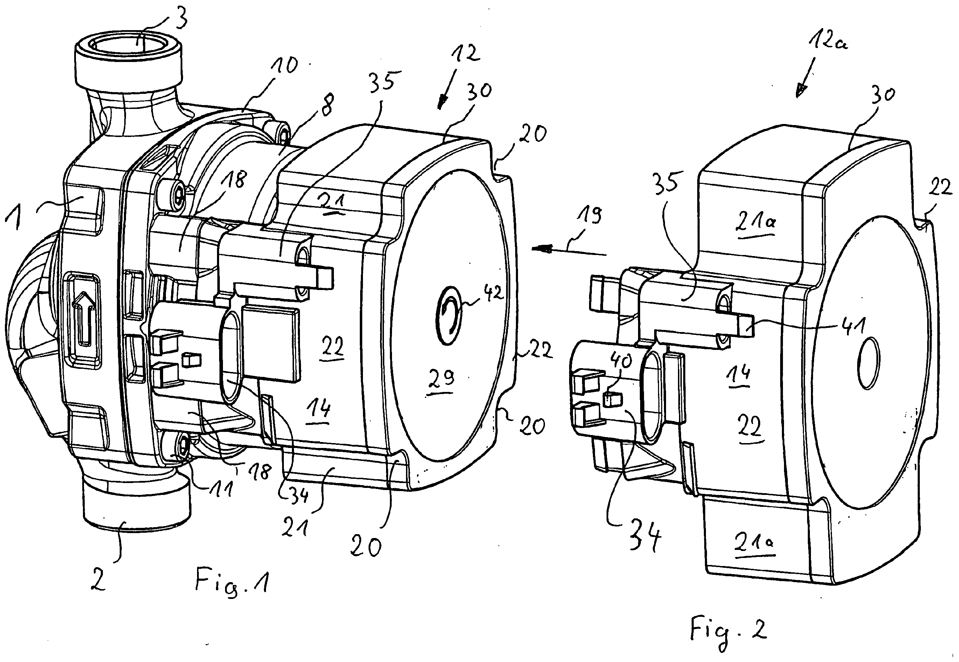

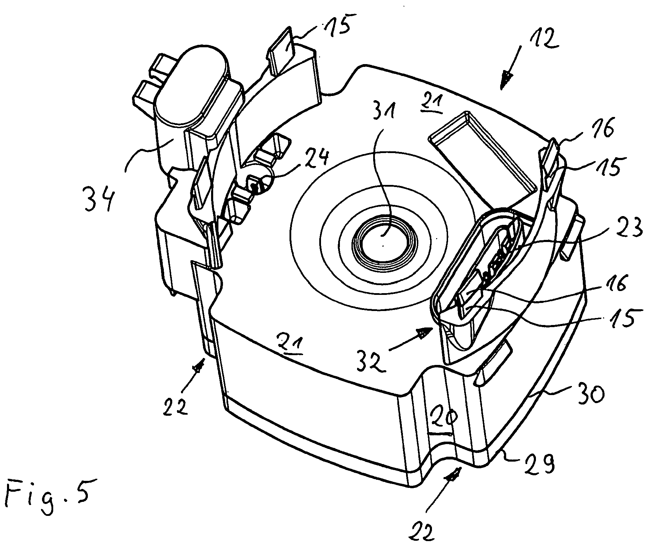

Die anhand der Figuren 1 und 3 bis 8 dargestellte Heizungsumwälzpumpe weist eine Kreiselpumpe mit einem Pumpengehäuse 1 mit einem Saugstutzen 2 und einem Druckstutzen 3 mit einer dazwischen ausgebildeten Kanalführung auf, welche die vom Saugstutzen 2 kommende Flüssigkeit einen Saugmund 4 eines innerhalb des Pumpengehäuse 1 gelagerten Pumpenlaufrads 5 zuführt, dessen Abtriebseite an einen zum Druckstutzen 3 führenden Kanal anschließt.

Die Heizungsumwälzpumpe weist weiterhin einen Motor auf, hier einem Nasslaufmotor, dessen Rotor 6 in einem Spaltrohr 7 läuft, das flüssigkeitsgefüllt ist. Umgeben wird das Spaltrohr 7 von einem Stator, d. h. von den umfangsseitig um das Spaltrohr 7 angeordneten Motorwicklungen, sowie einem Motorgehäuse 8, welches den Stator aufnimmt. Der Rotor 6 weist eine zentrale Welle 9 auf, die sich bis in das Pumpengehäuse 1 erstreckt und das Pumpenlaufrad 5 trägt, sodass die Drehbewegung des Rotors 6 auf das Pumpenlaufrad 5 übertragen wird.

Das Motorgehäuse 8 weist an seiner zum Pumpengehäuse 1 weisenden Seite einen Flansch 10 auf, mit dem es an das Pumpengehäuse 1 angeschlossen und über vier Schrauben 11 in den Eckbereichen des Flansches mit dem Pumpengehäuse 1 dicht und fest verbunden ist. In der dargestellten Ausführungsform bestehen Pumpengehäuse 1 und Motorgehäuse 8 aus Metall und sind als Gussteile gefertigt.

Bei den hier dargestellten Heizungsumwälzpumpen ist das Motorgehäuse 8 als metallisches Gussgehäuse ausgebildet. Für die vorliegende Erfindung kann das Gehäuse jedoch auch durch einen vergossenen Stator gebildet werden, wie dies dann der Fall ist, wenn die Statorwicklung in Kunststoff eingegossen ist. Auch kann das Motorgehäuse als Kunststoffspritzgussteil ausgebildet sein. Es versteht sich, dass dann der weiter unten im Einzelnen beschriebene Erdungskontakt gesondert innerhalb des Kunststoffes eingegliedert ist und elektrisch leitend mit dem Statorblechpaket und dem dann metallisch ausgebildeten Spaltrohr des Motors verbunden ist.

Die Heizungsumwälzpumpe weist weiterhin einen Klemmenkasten 12 auf, der aus Kunststoff besteht und an der vom Pumpengehäuse 1 abgewandten Axialseite des Motorgehäuses 8 angebracht ist und das Motorgehäuse 8 zu seiner Axialseite vollständig und radial, d. h. umfangsseitig, teilweise übergreift.

Die vorstehend und nachstehend aufgeführten Raumbezeichnungen axial und radial beziehen sich auf die Drehachse 13 des Rotors 6 bzw. des Pumpenlaufrades 5. Die Axialseiten sind also die Seiten, die zur Drehachse 13 im Wesentlichen senkrecht verlaufen, wohingegen Radialflächen die Flächen sind, welche sich parallel zur Drehachse erstrecken.

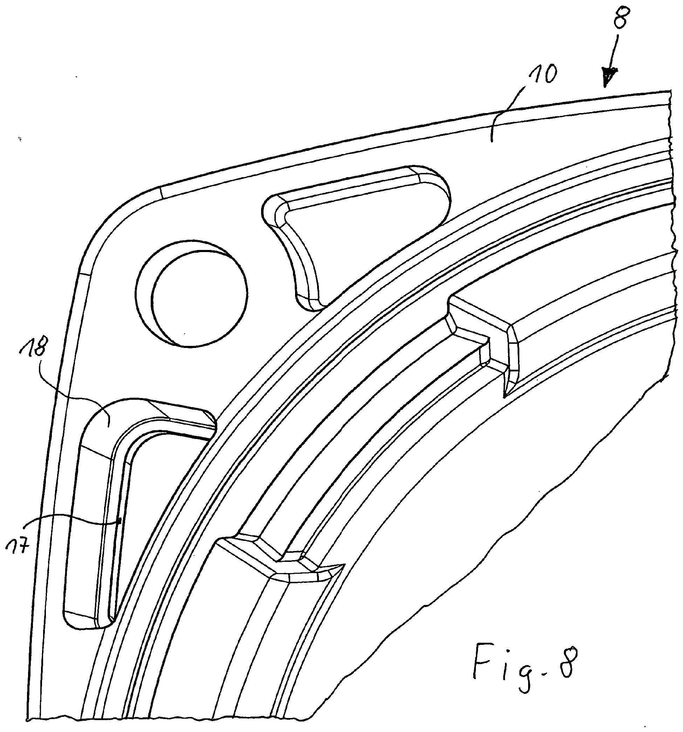

Das Motorgehäuse 8 weist im Flanschbereich einen abgerundeten im Wesentlichen quadratischen Querschnitt auf, wohingegen der übrige Teil des Motorgehäuses 8, also der sich zum Klemmenkasten 12 anschließende Teil im Wesentlichen einen kreisrunden Querschnitt aufweist und daher eine zylindermantelförmige Umfangsfläche aufweist. Während Pumpengehäuse 1 und Motorgehäuse 8 mittels vier Schrauben 11 lösbar miteinander verbunden sind, ist der aus Kunststoff bestehende Klemmenkasten 12 am Motorgehäuse 1 durch Schnappverbindungen befestigt. Hierzu weist der Klemmenkasten 12 vier sich aus den Seitenwandungen 14 des Klemmenkastens zum Pumpengehäuse 1 hin erstreckende Zungen 15 auf, an deren Ende seitlich Schnappvorsprünge 16 angeordnet sind, die Schnappausnehmungen 17 im Motorgehäuse 8 hintergreifen, welche am Motorgehäuse 8 im bereich des Flansches 10 angeformt sind. Diese Schnappausnehmungen 17 sind jeweils durch eine Stufe in einer rohrförmigen vom Flansch 10 zum Klemmenkasten 12 weisenden Führung 18 am Motorgehäuse 8 gebildet (siehe Fig. 8).

Beim Aufstecken des Klemmenkastens 12 auf das Motorgehäuse 8 in Achsrichtung, also in Aufsteckrichtung 19, gelangen die Zungen 15 in die fluchtend dazu angeordneten Führungen 18, wobei die Schnappvorsprünge 16 durch Querauslenkung der Zungen seitlich nach innen an den die Schnappausnehmungen 17 bildenden Stufen vorbeifahren und nach Überfahren derselben durch elastisches Rückstellen der Zungen 15 nach außen einrasten und damit den Klemmenkasten 12 auf dem Motorgehäuse 8 halten.

Der Klemmenkasten 12 hat in Richtung der Drehachse 13 gesehen, eine im Wesentlichen rechteckige Außenkontur und ist in den Eckbereichen, also im Bereich gedachter axialer Verlängerungen der Schrauben 11 ausgespart ausgebildet, damit die Schrauben 11 auch bei aufgesetzten Klemmenkasten 12 für ein aus Axialrichtung aufgesetztes Werkzeug zugänglich sind. Diese Eckausnehmungen sind mit 20 gekennzeichnet.

Bei dieser Formgebung ergeben sich bei der dargestellten vertikalen Einbaulage (Saugstutzen 2 und Druckstutzen 3 liegen vertikal übereinander) horizontale Randbereiche 21 und vertikale Randbereiche 22 des Klemmenkastens 12.

Die vertikalen Randbereiche 22 werden bei der dargestellten Ausführungsform zur Herausführung elektrischer Kontakte genutzt, wohingegen die horizontalen Randbereich 21 zur Anordnung von Elektronikbauteilen innerhalb des Klemmenkastens genutzt werden. Da baugleiche Pumpen mit Elektromotoren mit unterschiedlicher Motorelektronik ausgestattet werden können, kann, wie beim Vergleich der Darstellung gemäß Fig. 1 und Fig. 2 deutlich wird, bei Verwendung unterschiedlicher Klemmenkästen, die sich ausschließlich in der radialen Erstreckung der horizontalen Randbereiche 21 unterscheiden, das Innenvolumen des Klemmenkastens variiert werden, ohne dass die elektrischen Anschlüsse hier geändert werden müssen, und zwar weder motorseitig noch klemmenkastenseitig. Die erweiterten horizontalen Randbereiche in Fig. 2 sind mit 21 a gekennzeichnet, der Klemmenkasten mit 12a.

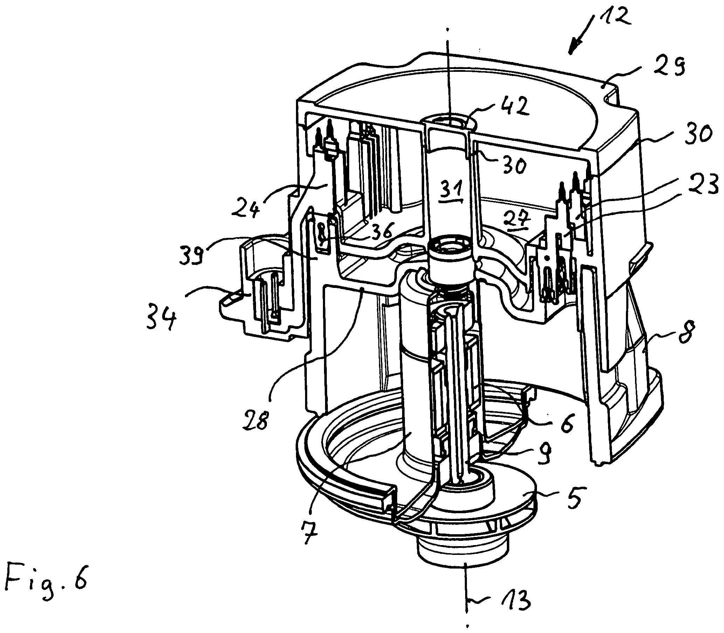

In den vertikalen Randbereichen 22 sind die elektrischen Kontakte angeordnet, und zwar in Achsrichtung vom Klemmenkasten 12 in Richtung zum Pumpengehäuse 1 gesehen sind in dem rechten vertikalen Randbereich 22 die zur Motorwicklung führenden Kontakte 23 und im linken vertikalen Randbereich 22 die zu einem Steckanschluss vom elektrischen Anschluss des Motors herausgeführten Kontakte 24 angeordnet. Diese Kontakte 23 und 24 sind in der Schnittdarstellung gemäß Fig. 6 zu erkennen. Sie sind jeweils aus Blech, also als Stanzteile gebildet und gruppenweise gleich ausgebildet, d. h. alle Kontakte 23 sind zueinander baugleich sowie alle Kontakte 24 sind untereinander baugleich.

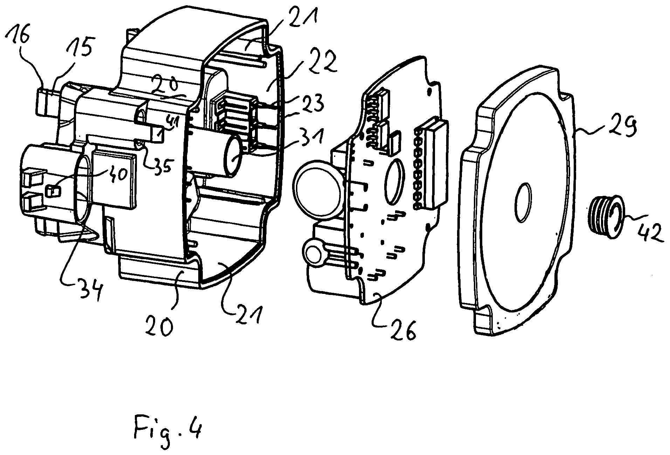

Alle Kontakte 23 und 24 sowie die weiteren an der linken Seite in dem vertikalen Randbereich 22 angeordneten Kontakte 25, welche zur Motorsteuerung dienen, enden im Klemmenkasten 12 an einer Platine 26, die in der Darstellung nach Fig. 6 aus Übersichtsgründen nicht dargestellt ist, jedoch in der Explosionsdarstellung gemäß Fig. 4 sichtbar ist und welche die elektrischen und elektronischen Bauteile der Motorsteuerung trägt, hier insbesondere einen Frequenzumrichter.

Die Kontakte 23, 24 und 25 sind dicht in den aus thermoplastischem Kunststoff gebildeten Klemmenkasten 12 eingegossen und zwar die Kontakte 23 in den Boden 27 des Klemmenkastens 12 und die Kontakte 24 und 25 in den Boden 27 bzw. die daran angrenzende Seitenwand 14.

Der Boden 27 des Klemmenkastens 12 ist vollständig geschlossen ausgebildet und zur Axialwand 28 des Motorgehäuses 8 beabstandet ausgebildet 8 (siehe Fig. 6). Der Boden 27 geht in die ebenfalls geschlossenen Seitenwände 14 über, das axiale Ende der Seitenwände 14 ist durch einen Deckel 29 abgeschlossen, der ebenfalls geschlossen ausgebildet ist (geschlossen bezogen auf das Klemmenkasteninnere). Der Deckel 29 ist durch eine umlaufende Schweißnaht 30 stoffschlüssig mit dem aus Boden 27 und Wandungen 14 bestehenden Grundkörper des Klemmenkastens 12 verbunden. Auf diese Weise ist das Klemmenkasteninnere nicht nur dicht, sondern hermetisch abgeschlossen, d. h. die darin befindliche und empfindliche Elektronik ist zuverlässig gegen Eindringen von Staub, Wasser und Gasen geschützt.

Die Schweißnaht 30 ist durch Laserschweißen von der Deckelseite ausgebildet. Hierzu ist der Deckel 29 aus einem für den Laserstrahl durchlässigem Material gefertigt, wohingegen der Grundkörper, also der Boden 27 und die Seitenwände 14, aus einem für den Laserstrahl im Wesentlichen undurchlässigem Material gefertigt sind. Die Schweißung erfolgt der Gestalt, dass der Laserstrahl von der Deckelseite aus auf die zum Deckel weisenden Stirnseiten der Seitenwände 14 gerichtet wird. Dabei gelangt der Laserstrahl durch den für den Laserstrahl durchlässigen Deckel 29 bis zu den Stirnseiten der Seitenwände 14, wo er das Material aufschmilzt, das aufgrund der Wärmeeinwirkung auch mit dem Deckelmaterial verschmilzt und auf diese Weise eine hermetische Schweißverbindung zwischen den Seitenwänden 14 und dem Deckel 29 bildet, wodurch der Klemmenkasten 12 nach außen hin hermetisch abgeschlossen ist. Dabei erfolgt die Verschweißung nicht nur im Bereich der außen liegenden Wände 14 sondern auch im Bereich der zentralen Ausnehmung 31, also an einer sonst zum Schweißen extrem schlecht zugänglichen Stelle.

Der Klemmenkasten 12 ist durch eine zentrale Ausnehmung 31 durchsetzt, welche in axialer Richtung verläuft, durch einen Stopfen 42 abgeschlossen ist und nicht mit dem Inneren des Klemmenkastens verbunden ist. Diese Ausnehmung 31 führt zu einer ebenfalls mittels einer Schraube verschlossenen Öffnung in der Axialwand 28 des Motorgehäuses 8, über welche das freie Ende der Welle 9 zugänglich ist, um bei einem Blockieren des Rotors 6 diesen von Hand frei drehen zu können. Die diese Öffnung verschließende Schraube ist als eine Art Madenschraube mit Innensechskant ausgebildet, wobei die Innensechskantaufnahme so ausgebildet ist, dass die Schraube beim Entfernen am Werkzeug verbleibt, sodass bei Entfernen des Stopfens 42 mittels eines Schlüssels diese Schraube entfernt und dann mittels eines weiteren Werkzeugs die Welle 9 manuell gedreht werden kann. In umgekehrter Reihenfolge werden die Öffnungen dann wieder verschlossen. Die Ausnehmung 31 durchsetzt den Klemmenkasten 12 also in axialer Richtung, sodass sich ein hermetisch abgeschlossener Ringraum im Klemmenkasten 12 ergibt.

Soweit es die zur Verbindung mit der Motorwicklung vorgesehenen Kontakte 23 angeht, sind diese nach Art einer Muffe 32 in den Boden des Klemmenkastens 12 und zwar in dem rechten vertikalen Randbereich 22 eingeformt. Am Motorgehäuse 8 ist ein an der Axialwand 28 axial zum Klemmenkasten 12 vorspringender Stecker 33 ausgebildet, welcher beim Aufstecken des Klemmenskastens 12 auf das Motorgehäuse 8 mit der Muffe 32 verbunden wird, worüber die elektrische Verbindung zwischen Klemmenkasten 12 und Motorwicklung hergestellt wird.

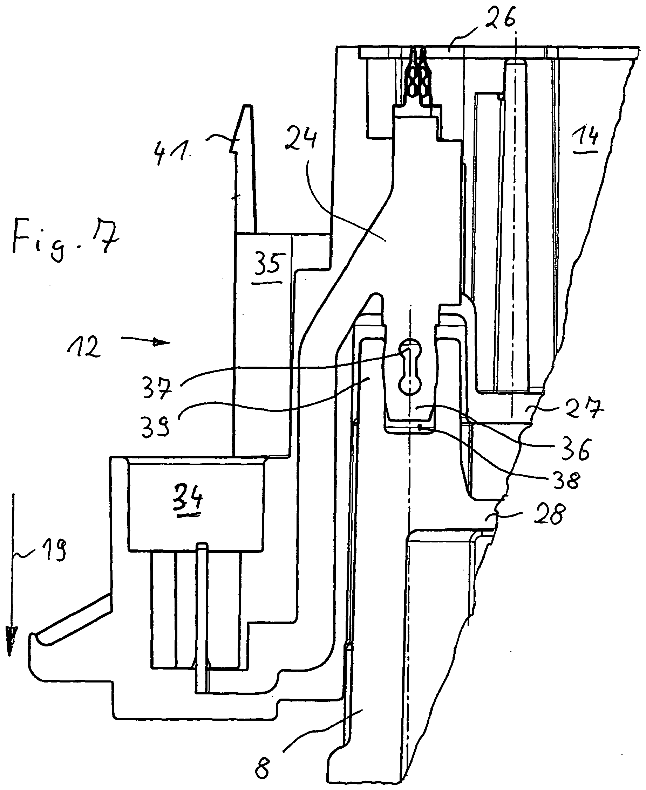

Auf der gegenüberliegenden linken Seite des vertikalen Randbereichs 22 des Klemmenkastens 12 sind die Kontakte 24 mit einem Bein zu einer Muffe 34 und die Kontakte 25 zu einer Muffe 35 herausgeführt. Einer der Kontakte 24, nämlich der in Fig. 7 dargestellte, ist ein Erdungskontakt und dient dazu, das metallische Motorgehäuse 8 mit dem entsprechenden Erdungsanschluss der Muffe 34 bzw. mit dem entsprechenden Erdungsanschluss auf der Platine 26 innerhalb des Klemmenkastens 12 zu verbinden. Hierzu weist der Kontakt 24 an einem Bein einen Steckteil 36 auf, der eine in der Blechebene leicht ballige Form hat sowie eine zentrale Längsausnehmung 37 in Steckrichtung des Steckteils 36. Fluchtend zu dem Steckteil 36 des Erdungskontaktes ist eine muffenartige Ausnehmung 38 in einer axialen Erhebung 39 an der Axialwand 28 des Motorgehäuses 8 vorgesehen. Die Querabmessung der Ausnehmung 38 ist geringfügig kleiner als die Quererstreckung des Steckteils 36 in dem balligen Bereich, sodass beim Einstecken des Steckteils 36 in die Ausnehmung 38 der Steckteil zumindest elastisch, möglicherweise auch plastisch verformt wird, wodurch ein inniger Kontakt zwischen Steckteil 36 und Ausnehmung 38 im Motorgehäuse 8 und somit eine zuverlässige Erdung sichergestellt wird. Damit der Steckteil 36 sich gegebenenfalls auch plastisch verformen kann, ist die Ausnehmung 37 vorgesehen.

Die Nichterdungskontakte 24, die von der Formgebung identisch mit dem Erdungskontakt ausgebildet sind, weisen ebenfalls ein Steckteil 36 mit Ausnehmung 37 auf, sind jedoch in dem Bereich des Steckteils 36 von Kunststoff umgossen, motorseitig ist hier ein Freiraum, da die Erhebung 39 quasi punktuell nur im Bereich des Steckteils 36 des Erdungskontaktes vorgesehen.

Die Kontakte 24 und somit insbesondere auch der Erdungskontakt, der eine innige Verbindung mit dem Motorgehäuse 8 hat, ist in dem Boden 27 bzw. in der Seitenwand 14 zu zwei Beinen abgezweigt ausgebildet (siehe Fig. 7) und verläuft schräg aus dem Klemmenkasten heraus zum Pumpengehäuse 1 hin, parallel am Außenumfang des Motorgehäuses 8 entlang, endet jedoch mit Abstand vor dem Flansch 10 des Motors und ist dort um 180° abgewinkelt, wo die Kontakte 24 zusammen die Muffe 34 bilden, welche zur Aufnahme eines Anschlusssteckers am Ende eines Kabels einer elektrischen Versorgungsleitung dient. Das Gehäuse der Muffe 34 ist einstückig mit dem Klemmenkasten 12 ausgebildet. Die Muffe 34 ist versetzt zum Klemmenkasten 12 neben dem Motorgehäuse 8 am Außenumfang desselben angeordnet. Ein in diese Muffe 34 eingreifender Stecker ist in Axialrichtung, und zwar in Richtung auf das Pumpengehäuse 1 einsteckbar und liegt dann neben dem Klemmenkasten 12, und zwar neben dem linken vertikalen Randbereich 22. Die Muffe 34 weist einen Schnappvorsprung 40, der Teil einer Schnappverbindung ist, deren anderer Teil am Gegenstück, also dem Stecker, vorgesehen ist.

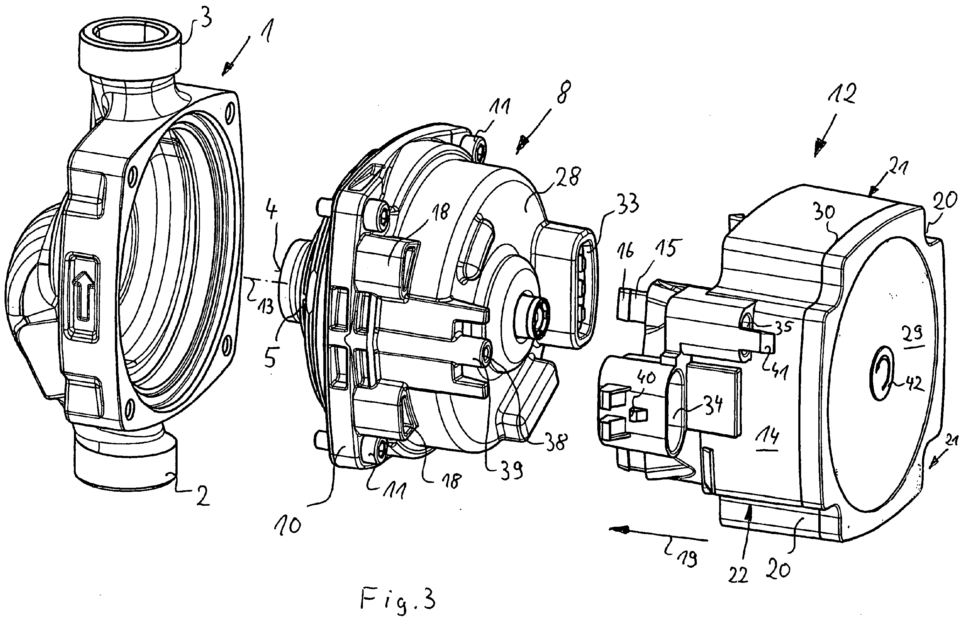

Die Muffe 35, welche die Kontakte 25 aufnimmt, ist in ähnlicher Weise aus dem Klemmenkasten herausgeführt, jedoch durch die Seitenwand 14. Die dort gebildete Muffe 35 liegt in der Darstellung gemäß Fig. 3 an dem linken vertikalen Randbereich 22 am Außenumfang des Klemmenkastens 12 an, ist jedoch anders als die Muffe 34 nicht zum Motorgehäuse 8 hin versetzt angeordnet, sondern liegt direkt neben dem Klemmenkasten 12. Dort weist die Muffe 35 einen Schnappvorsprung 41 auf, welcher den in diese Muffe eingreifenden Stecker gegen Lösen sichert. Die Muffen 34 und 35 sind wie die Muffe 32 einstückig mit dem Klemmenkasten 12 im Kunststoffspritzgussverfahren hergestellt, also durch Umspritzen der Kontakte 23, 24, 25 bei der Herstellung des Klemmenkastengrundkörpers.

Die Muffen 34 und 35 sind als Flachmuffen ausgebildet, derart, dass ihre Kontakte 24 bzw. 25 jeweils nebeneinander in einer im Wesentlichen parallel zum Motorgehäuse 8 angeordneten Ebene befindlich sind.

Durch diese Anordnung ist der radiale Bauraum neben dem Motorgehäuse 8 bzw. Klemmenkasten 12 vergleichsweise klein.

Wenn das Motorgehäuse nicht als metallisches Gussgehäuse sondern als Kunststoffgehäuse oder als den Stator umgebene Vergussmasse ausgebildet ist, dann ist die Ausnehmung 38 in der Erhebung des Motorgehäuses mit einem Kontakt versehen, beispielsweise durch eine hohlzylindrische metallische Muffe gebildet, die elektrisch leitend mit dem Statorblechpaket und dem metallischen Spaltrohr 7 verbunden ist, um die elektrische Sicherheit der Heizungsumwälzpumpe für den Fall, dass eines dieser Bauteile durch einen Statordefekt Spannung führt, gewährleistet ist.

### Bezugszeic henliste

- 1: - Pumpengehäuses
- 2: - Saugstutzen
- 3: - Druckstutzen
- 4: - Saugmund
- 5: - Pumpenlaufrad
- 6: - Rotor
- 7: - Spaltrohr
- 8: - Motorgehäuse
- 9: - Welle
- 10: - Flansch von 8
- 11: - Schrauben
- 12: - Klemmenkasten
- 12a: - Klemmenkasten in Fig. 2
- 13: - Drehachse von 9 und 5
- 14: - Seitenwand des Klemmenkastens
- 15: - Zungen von 12
- 16: - Schnappvorsprünge an den Zungen
- 17: - Schnappausnehmungen
- 18: - Führungen
- 19: - Aufsteckrichtung
- 20: - Eckausnehmungen
- 21: - horizontale Randbereiche des Klemmenkastens
- 21a: - horizontale Randbereiche des Klemmenkastens in Fig. 2
- 22: - vertikale Randbereiche
- 23: - Kontakte zum Motor
- 24: - Kontakte zur externen Stromversorgung
- 25: - Kontakte für die Motorsteuerung
- 26: - Platine
- 27: - Boden des Klemmenkastens
- 28: - Axialwand des Motorgehäuses
- 29: - Deckel des Klemmenkastens
- 30: - Schweißnaht
- 31: - zentrale Ausnehmung im Klemmenkasten
- 32: - Muffe im Boden des Klemmenkastens
- 33: - Stecker am Motorgehäuse
- 34: - Muffe der Kontakte 24
- 35: - Muffe der Kontakte 25
- 36: - Steckteil des Kontaktes 24
- 37: - Ausnehmung im Steckteil
- 38: - Ausnehmung in der Erhebung 39
- 39: - Erhebung am Motorgehäuse
- 40: - Schnappvorsprung an der Muffe 34
- 41: - Schnappvorsprung an der Muffe 35
- 42: - Stopfen für die Ausnehmung 31

## Patentansprüche

1. Heizungsumwälzpumpe mit einem Pumpengehäuse (1) mit darin angeordnetem Pumpenlaufrad (5), das von einem Elektromotor angetrieben ist, der in einem axial an das Pumpengehäuse (1) anschließenden Motorgehäuse (8) angeordnet ist, mit einem axial an das Motorgehäuse (8) anschließenden Klemmenkasten (12) zur Aufnahme von elektrischen und/oder elektronischen Bauteilen der Motorsteuerung und mit einem/einer außen am Klemmenkasten (12) angeordneten Stecker oder Muffe (34) einer elektrischen Steckverbindung zum elektrischen Anschluss, **dadurch gekennzeichnet, dass** der Stecker oder die Muffe (34) axial versetzt zum Klemmenkasten (12) und benachbart zum Motorgehäuse (8) so angeordnet ist, dass das Gegenstück der Steckverbindung in axialer Richtung (19) zum Pumpengehäuse (1) hin aufsteckbar ist und die elektrische Steckverbindung in einem Bereich neben dem Motor angeordnet ist und den Klemmenkasten axial nicht überragt.

2. Heizungsumwälzpumpe nach Anspruch 1, **dadurch gekennzeichnet, dass** das Motorgehäuse (8) einen im wesentlichen kreisrunden Querschnitt aufweist und einen zum Pumpengehäuse (1) gerichteten im wesentlichen rechteckigen Flansch (10) aufweist, in dessen Eckbereichen (20) Schrauben (11) durchgeführt sind, welche Motorgehäuse (8) und Pumpengehäuse (1) verbinden, und dass der Stecker oder die Muffe (34) in einem radialen Bereich angeordnet ist, der zwischen gedachten axialen Verlängerungen benachbarter Schrauben (11) oder radial versetzt dazu liegt.

3. Heizungsumwälzpumpe nach Anspruch 1 oder 2, **dadurch gekennzeichnet, dass** neben dem Stecker oder der Muffe (34) ein weiterer Stecker oder eine weitere Muffe (35) angeordnet ist, über die ein Sensor oder eine externe Steuerung anschließbar ist.

4. Heizungsumwälzpumpe nach einem der vorhergehenden Ansprüche, **dadurch gekennzeichnet, dass** ein Stecker und/oder eine Muffe (32, 34, 35) einstückig mit zumindest einem Teil des Klemmenkastens (12) als Kunststoffspritzgussteil ausgebildet ist und eingegossene Kontakte (23, 24, 25) aufweist, die innerhalb des Klemmenkastens (12) vorzugsweise in oder an einer Platine (26) im Klemmenkasten (12) enden.

5. Heizungsumwälzpumpe nach Anspruch 4, **dadurch gekennzeichnet, dass** die Stecker und/oder Muffen (34, 35) nebeneinander und in axialer Richtung (19) versetzt zueinander angeordnet sind.

6. Heizungsumwälzpumpe nach einem der vorhergehenden Ansprüche, **dadurch gekennzeichnet, dass** der Stecker oder die Muffe (34) für den elektrischen Anschluss im Bereich des Motorgehäuses (8) und der weitere Stecker oder die weitere Muffe (35) im Bereich des Klemmenkastens (12) angeordnet ist.

7. Heizungsumwälzpumpe nach einem der vorhergehenden Ansprüche, **dadurch gekennzeichnet, dass** ein Stecker oder eine Muffe (34, 35) mittels einer Schnappverbindung (40, 41) mit dem Gegenstück der Steckverbindung verbunden ist.

8. Heizungsumwälzpumpe nach einem der vorhergehenden Ansprüche, **dadurch gekennzeichnet, dass** der Klemmenkasten (12) mittels mindestens einer Schnappverbindung (16, 17) mit dem Motorgehäuse (8) und/oder dem Pumpengehäuse (1) verbunden ist.

9. Heizungsumwälzpumpe nach einem der vorhergehenden Ansprüche, **dadurch gekennzeichnet, dass** der Stecker oder die Muffe (34) für den elektrischen Anschluss als Flachstecker bzw. Flachmuffe ausgebildet ist, wobei die Kontakte (24) im Wesentlichen in einer Ebene parallel zum Motorgehäuse (8) angeordnet sind.

10. Heizungsumwälzpumpe nach einem der vorhergehenden Ansprüche, **dadurch gekennzeichnet, dass** der weitere Stecker oder die weitere Muffe (35) als Flachstecker bzw. Flachmuffe ausgebildet ist, wobei die Kontakte (25) im Wesentlichen in einer Ebene parallel zum Motorgehäuse (8) angeordnet sind.

## Claims

1. A heating circulation pump with a pump housing (1) with a pump impeller (5) which is arranged therein and which is driven by an electrical motor arranged in a motor housing (8) connecting axially onto the pump housing (1), with a terminal box (12) connecting axially onto the motor housing (8), for receiving electrical and/or electronic components of the motor control and with a plug or socket (34) of an electrical plug connection for the electrical connection, said plug or socket being arranged outside on the terminal box (12), **characterised in that** the plug or the socket (34) is arranged axially offset to the terminal box (12) and adjacent to the motor housing (8) such that the counterpart of the plug connection can be pushed on in the axial direction (19) to the pump housing (1) and the electrical plug connection is arranged in a region next to the motor and does not project axially beyond the terminal box.

2. A heating circulation pump according to claim 1, **characterised in that** the motor housing (8) has an essentially circular cross section and has an essentially rectangular flange (10) which is directed to the pump housing (1) and in whose corner regions (20) screws (11) are led through, which connect the motor housing (8) and the pump housing (1), and that the plug or the socket (34) is arranged in a radial region which lies between an imagined axial extensions of adjacent screws (11) or radially offset thereto.

3. A heating circulation pump according to claim 1 or 2 **characterised in that** a further plug or a further socket (35) is arranged next to the plug or the socket (34), via which further plug or socket, a sensor or an external control can be connected.

4. A heating circulation pump according to one of the preceding claims, **characterised in that** a plug and/or a socket (32, 34, 35) is designed as one piece with at least a part of the terminal box (12), as a plastic injection moulded part, and comprises cast-in contacts (23, 24, 25) which within the terminal box (12) preferably end in or on a circuit board (26) in the terminal box (12).

5. A heating circulation pump according to claim 4, **characterised in that** the plugs and/or sockets (34, 35) are arranged next to one another and offset to one another in the axial direction (19).

6. A heating circulation pump according to one of the preceding claims, **characterised in that** the plug or the socket (34) for the electrical connection is arranged in the region of the motor housing (8), and the further plug or the further socket (35) is arranged in the region of the terminal box (12).

7. A heating circulation pump according to one of the preceding claims, **characterised in that** a plug or a socket (34, 35) is connected to the counterpart of the plug connection by way of a snap connection (40, 41).

8. A heating circulation pump according to one of the preceding claims, **characterised in that** the terminal box (12) is connected to the motor housing (8) and/or to the pump housing (1) by way of at least one snap connection (16, 17).

9. A heating circulation pump according to one of the preceding claims, **characterised in that** the plug or the socket (34) for the electrical connection is designed as a flat plug and flat socket respectively, wherein the contacts (24) are arranged essentially in a plane parallel to the motor housing (8).

10. A heating circulation pump according to one of the preceding claims, **characterised in that** the further plug or the further socket (35) is designed as a flat plug or flat socket, wherein the contacts (25) are arranged essentially in a plane parallel to the motor housing (8).

## Revendications

1. Pompe de recirculation de chauffage avec un carter de pompe (1) avec une roue de pompe (5) disposée là-dedans qui est entraînée par un moteur électrique qui est disposé dans un carter de moteur (8) axialement adjacent au carter de pompe (1), avec un boîtier de connexion (12) axialement adjacent au carter de moteur (8) pour la réception de composants électriques et/ou électroniques pour la commande du moteur et avec une fiche ou prise (34) d'une connexion électrique par fiche, disposée à l'extérieur sur le boîtier de connexion (12), pour une connexion électrique, **caractérisée en ce que** la fiche ou la prise (34) est disposée axialement décalée par rapport au boîtier de connexion (12) et adjacent au carter de moteur (8) de manière telle que la contrepartie de la connexion par fiche puisse être enfichée en direction axiale (19) en direction du carter de pompe (1) et que la connexion électrique par fiche soit disposée dans une zone à côté du moteur et qu'elle ne dépasse pas axialement du boîtier de connexion.

2. Pompe de recirculation de chauffage selon la revendication 1, **caractérisée en ce que** le carter de moteur (8) présente une section transversale sensiblement circulaire et comprend une flasque (10) sensiblement rectangulaire orientée vers le carter de pompe (1) dans les zones d'angle (20) de laquelle des vis (11) sont passées qui relient le carter de moteur (8) au carter de pompe (1), et **en ce que** la fiche ou la prise (34) est disposée dans une zone radiale qui se situe entre des prolongements axiaux imaginaires de vis avoisinantes (11) ou de manière décalée par rapport à cela.

3. Pompe de recirculation de chauffage selon la revendication 1 ou 2, **caractérisée en ce que**, à côté de la fiche ou de la prise (34), une autre fiche ou une autre prise (35) est disposée par laquelle un capteur ou une commande externe peut être raccordée.

4. Pompe de recirculation de chauffage selon quelconque des revendications précédentes, **caractérisée en ce qu'**une fiche et/ou une prise (32, 34, 35) est formée en une seule pièce avec au moins une partie du boîtier de connexion (12) comme une pièce moulée par injection en matière synthétique et comprend des contacts moulés (23, 24, 25) qui se terminent à l'intérieur du boîtier de connexion (12) de préférence dans ou sur une platine (26) dans le boîtier de connexion (12).

5. Pompe de recirculation de chauffage selon la revendication 4, **caractérisée en ce que** le fiches et/ou les prises (34, 35) sont disposées l'une à côté de l'autre et décalées l'une par rapport à l'autre dans la direction axiale (19).

6. Pompe de recirculation de chauffage selon l'une quelconque des revendications précédentes, **caractérisée en ce que** la fiche ou la prise (34) pour la connexion électrique est disposée dans la zone du carter de moteur (8) et que la fiche supplémentaire ou la prise supplémentaire (35) est disposée dans la zone du boîtier de connexion (12).

7. Pompe de recirculation de chauffage selon l'une quelconque des revendications précédentes, **caractérisée en ce qu'**une fiche ou une prise (34, 35) est connectée avec la contrepartie de la connexion par fiche à l'aide d'une connexion par encliquetage (40, 41).

8. Pompe de recirculation de chauffage selon l'une quelconque des revendications précédentes, **caractérisée en ce que** le boîtier de connexion (12) est attaché au carter de moteur (8) et/ou au carter de pompe (1) à l'aide d'au moins une connexion par encliquetage (16, 17).

9. Pompe de recirculation de chauffage selon l'une quelconque des revendications précédentes, **caractérisée en ce que** la fiche ou la prise (34) pour la connexion électrique est configurée comme fiche plate ou prise plate, les contacts (24) étant disposés essentiellement dans un plan parallèle au carter de moteur (8).

10. Pompe de recirculation de chauffage selon l'une quelconque des revendications précédentes, **caractérisée en ce que** la fiche supplémentaire ou la prise supplémentaire (35) est configurée comme fiche plate ou prise plate, les contacts (25) étant disposés essentiellement dans un plan parallèle au carter de moteur (8).
